# EUROPEAN PATENT APPLICATION

(11) **EP 1 292 101 A2**
(43) Date of publication of application: **12.03.2003**
(21) Application number: 02256254.0
(22) Date of filing: 10.09.2002
(51) Int. Cl.: H04N 1/00

(54) **Communication apparatus, method of controlling same, and control program**

(30) Priority: 11.09.2001 JP 2001275370; 11.09.2001 JP 2001275367
(71) Applicant: CANON KABUSHIKI KAISHA, Tokyo (JP)
(72) Inventor: Nakao, Muneki, c/o Canon Kabushiki Kaisha, Tokyo (JP)
(74) Representative: Beresford, Keith Denis Lewis

(57) **Abstract**

A communication apparatus that exhibits high productivity is provided. To accomplish this, a browser is caused to analyze HTML data that is for displaying a registration menu. The registration menu is displayed on a display. The content of registration information that has been entered using the browser is checked and then stored in a non-volatile ROM.

## Description

### FIELD OF THE INVENTION

This invention relates to a communication apparatus that is capable of analyzing and displaying markup language.

### BACKGROUND OF THE INVENTION

With the spread of the Internet in recent years, it has become common for communication systems to have an installed Web browser to enable the browsing of Web data. Generally, a communication system of this kind is equipped with a browser program for analyzing a display program coded in markup language such as HTML and displaying the results of analysis on a display screen. There are cases where information representing an IP address and a file name is embedded in the code of the display program. The browser searches for the server of this IP address, accesses the server and can execute the file having the file name.

For example, if <FORM method = "get" action = "HTTP://www.abc.com/abc.cgi> is written in a program in the case of HTML, then it is possible to execute the program abc.cgi in the server having the URL www.abc.com.

However, the Web browser installed in conventional communication equipment connects to the Internet via a public line and only displays content such as a Web page located at the server. In other words, a program that is for displaying a display screen which is part of an application internal to communication systems, e.g., a facsimile machine, rather than Internet content, is coded in a program language such as C language.

Such a display program, however, is difficult to create owing to the nature of the program language such as C language per se, and creation is not easy to carry out unless the actual equipment is used. Techniques for equipment development based upon program language such as C language entail the creation of a plurality of products, namely a programming product and document products (a development document, a service-oriented document, an instruction manual for users in the market, etc.), the content of which matches the programming product. The procedure for creating these products is complicated.

Further, with a communication apparatus having a browser, it is not possible to respond to an instruction from the browser by executing a so-called local program that has been provided in the communication apparatus itself, by writing data freely to a memory of the communication apparatus itself, or by controlling operations other than video and voice output based upon data input to the browser.

In other words, a browser that interprets markup language has as its purpose the display of a screen that is in accordance with a display program located in the server; it cannot handle data internal to the terminal that possesses the browser.

Accordingly, in order to run a local program, for example, that is provided in an apparatus, a display screen that prompts the user to make entries must be described in C language or the like. Creating such a program requires more labor in comparison with a case where a program is coded in markup language. As a result, this invites a decline in freedom of design and efficiency of equipment development and impedes an improvement in the productivity of the equipment itself.

### SUMMARY OF THE INVENTION

Accordingly, a concern of the present invention is to provide a communication apparatus of high productivity, a method of controlling this apparatus and a control program therefor.

According to the present invention, there is provided a communication apparatus for analyzing markup language, comprising: a first memory for storing display data that has been coded in markup language, the display data being for displaying an information input screen that enables input of information from a user;
an interpreter for analyzing the display data; means for generating display data for displaying an information input screen as the result of analysis performed by the interpreter; an input device for inputting configuration information, which relates to configuring of the communication apparatus, to the information input screen when displayed; and a second memory for storing the configuration information that has been input to the information input screen.

According to another aspect of the present invention there is provided a communication apparatus for analyzing markup language, comprising: a memory for storing a browser program, which analyzes display data coded in markup language and converts the data to display information, and a local program that executes processing different from that for displaying a browser; a processor for executing the programs that have been stored in the memory; and means for generating display data for displaying an image based upon the display information; wherein the browser program is adapted to cause the processor to determine whether the display data coded in the markup language contains markup that designates execution of the local program, and to cause the processor to execute the local program if it is determined that the display data contains markup designating execution of the local program.

In still another aspect of the present invention, there is provided a method of controlling a communication apparatus, comprising: an analyzing step of analyzing display data for displaying an information input screen, the display data being coded in markup language; a display step of displaying an information input screen using result of analysis performed at the analyzing step; an input step of accepting an input to the information input screen; and a storage step of storing information, which has been input to the information input screen, in the communication apparatus as configuration information of the communication apparatus.

In still another aspect of the present invention, there is provided a method of controlling a communication apparatus having a memory storing a browser program for analyzing markup language and a local program for executing processing different from that for displaying a browser, and a display for displaying result of analysis performed by the browser program, comprising: a step of launching the browser program; an analyzing step of causing the browser program to analyze display data coded in markup language; a display step of causing result of analysis to be displayed on a display; and a local-program execution step of executing the local program if result of analysis is that the display data contains markup designating execution of the local program.

In still another aspect of the present invention, there is provided a control program for a communication apparatus having a memory storing a browser program for analyzing markup language and a local program for executing processing different from that for displaying a browser, and a display for displaying result of analysis performed by the browser program, the program implementing the following steps: a step of launching the browser program; an analyzing step of causing the browser program to analyze display data coded in markup language; a display step of causing result of analysis to be displayed on a display; and a local-program execution step of executing the local program if result of analysis is that the display data contains markup designating execution of the local program.

In still another aspect of the present invention, there is provided a control program for controlling a communication apparatus, the program causing the following steps to be executed: an analyzing step of analyzing display data for displaying an information input screen, the display data being coded in markup language; a generating step of generating data for displaying an information input screen using result of analysis performed at the analyzing step; an input step of accepting an input to the information input screen; and a storage step of storing information, which has been input to the information input screen, in the communication apparatus as configuration information of the communication apparatus.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a diagram useful in describing the operation of a facsimile machine according to an embodiment of the present invention;
Fig. 2 is a block diagram illustrating the structure of the facsimile machine according to this embodiment;
Fig. 3 is a block diagram illustrating the structure of a display unit of the facsimile machine according to this embodiment;
Fig. 4 is a block diagram illustrating the structure of a memory of the facsimile machine according to this embodiment;
Fig. 5 is a diagram illustrating the structure of a control panel of the facsimile machine according to this embodiment;
Fig. 6 is a diagram illustrating HTML data of a registration menu capable of being displayed by the facsimile machine according to this embodiment;
Fig. 7 is a diagram illustrating an example of a registration menu displayed based upon the HTML data of Fig. 6;
Fig. 8 is a diagram illustrating HTML data capable of being displayed by the facsimile machine according to this embodiment;
Fig. 9 is a diagram illustrating an example of a registration menu displayed based upon the HTML data of Fig. 6; and
Fig. 10 is a flowchart useful in describing processing according to an input-check program executed by the facsimile machine according to this embodiment.

### DESCRIPTION OF THE PREFERRED EMBODIMENT

A preferred embodiment of the present invention will now be described in detail with reference to the drawings. It should be noted, however, that the relative placement of the structural elements and the display screen, etc., described in this embodiment do not limit the scope of the present invention unless there is specific wording otherwise. Furthermore, a local program mentioned in this specification refers to a program that has been stored in internal storage means and is other than a program on a network to which a facsimile machine has been connected. The local program does not include a program such as JavaScript associated with a browser or HTML data. In addition, HTML data referred to here is coded in HTML and includes all of the data that can be interpreted by a browser.

### (Embodiment)

A facsimile machine having an Internet communication function will be described as an embodiment of the present invention.

### <Overview>

The facsimile machine embodying the present invention is such that various items of configuration information (e.g., user name, present time, answering-service setting, unattended recording and transfer, image reading density/resolution, etc.) are registered from a browser that is capable of interpreting markup language such as HTML, CTML and XML. Here display of a GUI for the registration operation and acquisition of settings from the user are implemented by a program coded in HTML.

The browser provided in this facsimile machine is capable of determining from HTML data serving as a display source whether execution of a certain specific local program has been commanded. More specifically, the browser determines whether an URL in a tag such as FORM in HTML data is the same as a specific URL that has been set in the browser beforehand, and causes the specific local program in the facsimile machine to be executed if the two URLs are the same. Furthermore, information that has been entered by the user via the browser is delivered to the local program. If the two URLs are different, the browser searches for the Web server to which the URL in the form tag has been assigned and transmits the user input information to the address of the found Web server in the manner of an ordinary browser.

The local program determines whether the input information from the user has appropriate content. If it is determined that the content is appropriate, then the local program executes registration processing with regard to a memory area, which is located within the apparatus, that is capable of storing the content. If the result of the determination is that the data would cause a problem in terms of registration, then the local program forgoes registration with regard to the memory area and causes the following message to the user to be displayed: "ENTER DATA AGAIN BECAUSE OF ...".

By adopting this expedient, it is possible to set appropriate registration information, which has been entered by the user, as registered information within the apparatus from content capable of being displayed by the browser.

### <Specific Structure>

The specific structure of a facsimile machine equipped with a browser according to this embodiment will now be described with reference to the drawings.

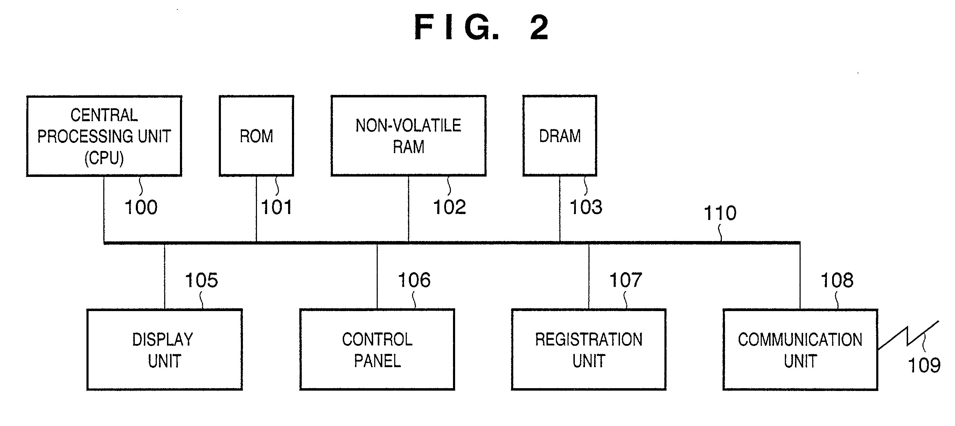

Fig. 2 is a block diagram illustrating the internal structure of a facsimile machine equipped with a browser according to this embodiment.

As shown in Fig. 2, the facsimile machine includes a central processing unit (CPU) 100 for controlling the overall apparatus; a ROM 101 for storing various programs such as a browser program and machine-specific data; a non-volatile RAM 102 for storing personal data, a telephone directory and data for backing up user-set switches; and a DRAM 103 for temporarily storing CPU working data, HTML data, display data and registration data.

The facsimile machine further includes a display unit 105 for displaying received data, machine status and a browser screen, etc., a control panel 106 comprising a numeric keypad (as for dialing), etc., a printer 107 for printing received images and text, and a communication unit 108 comprising a modem, etc., for communication by connection to a line 109. These units are interconnected by a system bus 110.

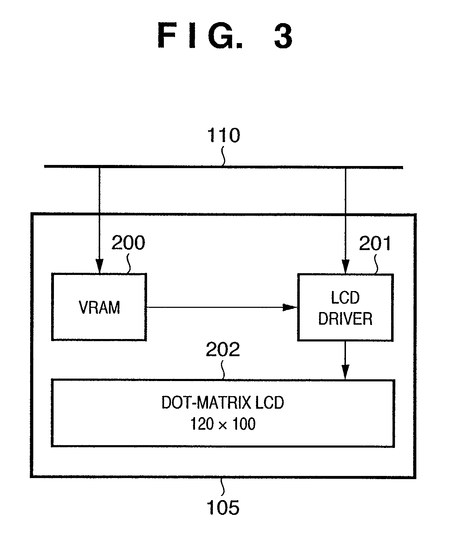

Fig. 3 is a diagram showing the structure of the display unit 105. The display unit 105 has a VRAM 200 for storing display data, and an LCD driver 201 for outputting the content of the VRAM 200 to a dot-matrix LCD 202.

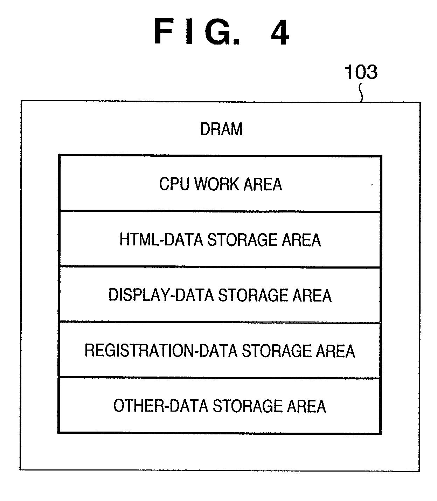

Fig. 4 illustrates a memory map indicating the internal structure of the DRAM 103. The DRAM 103 includes a CPU work area used when the CPU 100 executes various programs, an HTML-data storage area for storing HTML data that has been received, a display-data storage area for storing display data, a print-data storage area for storing print data, and a storage area for storing other data.

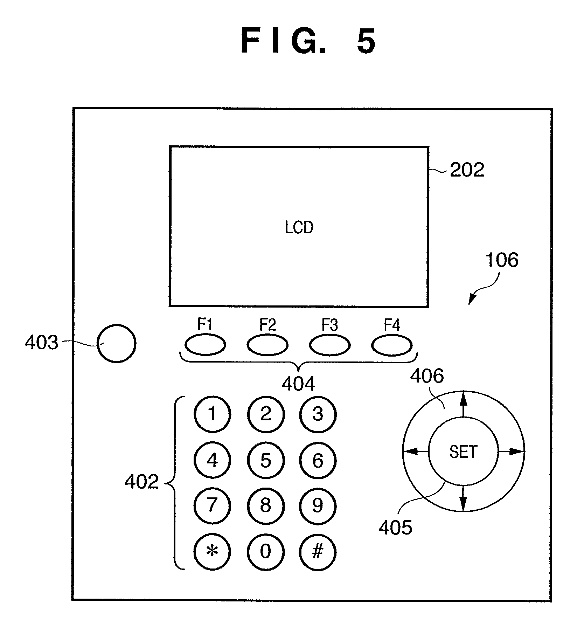

Fig. 5 is a diagram showing the external appearance of the control panel 106 on this facsimile machine. The control panel 106 has the LCD 202, numeric keypad 402 for entering telephone numbers and the like, a registration key 403 used to set functions or the like, four function keys 404 used to make multiple inputs, a setting key 405, which is key for inputting settings, and left, right, up and down keys 406 used to move a cursor on the display.

### <Internet Browsing Operation>

An ordinary browsing operation performed by this facsimile machine to receive and display HTML data from the Internet will now be described.

First, the facsimile machine is connected to the line 109 by a known method using the communication unit 108. Under these conditions, HTML data is received via the line 109 and communication unit 108, and the received HTML data is stored in the HTML-data storage area of the DRAM 103. Next, a browser program within the ROM 101 analyzes the tag of the HTML data stored in the HTML-data storage area of the DRAM 103, expands the tag into image data serving as display information and stores the data in the DRAM 103 again in the display-data storage area thereof. From the data that has been stored in the display data area, data requiring display is sent to the VRAM 200 of display unit 105. Here the data is displayed on the dot-matrix LCD 202 driven by the LCD driver 201.

If an URL (or IP address) is contained in a tag such as FORM in the received HTML data, the browser program can find the Web server that has this URL or IP address on the network and can deliver information, which the user has input to the browser, to a CGI program within this server. The CGI program within the server employs the user-entered information to retrieve text on the network, to write messages to a bulletin board and to carry on a network chat.

### <Registration Operation>

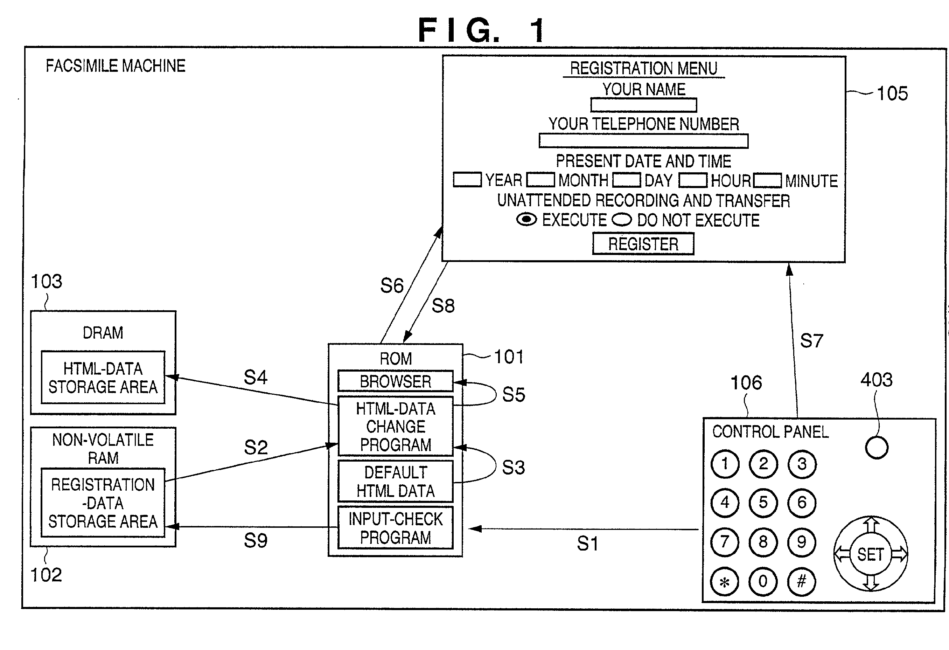

A method of performing registration from a display screen based upon a program written in HTML will be described with reference to Fig. 1.

First, at step S1 in Fig. 1, the registration key 403 on the control panel 106 is pressed by the user in order to display a registration menu serving as an information input screen. When the key 403 is pressed, the CPU 100 effects a transition to the registration mode by changing, from OFF to ON, a flag (not shown) indicating the status of the registration key stored in the non-volatile RAM 102.

Next, the CPU 100 executes an HTML-data change program, reads out (step S2) set content that has been stored in the registered-data storage area of the non-volatile RAM 102, changes default HTML data (step S3), which is for displaying the registration menu and has been stored in the ROM 101, in accordance with the set content and then expands this data (step S4) in the HTML-data storage area of the DRAM 103 as HTML data for displaying the registration menu.

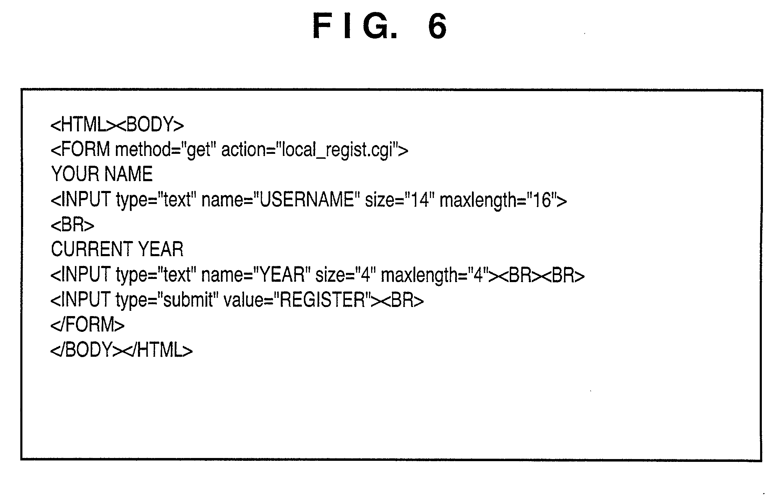

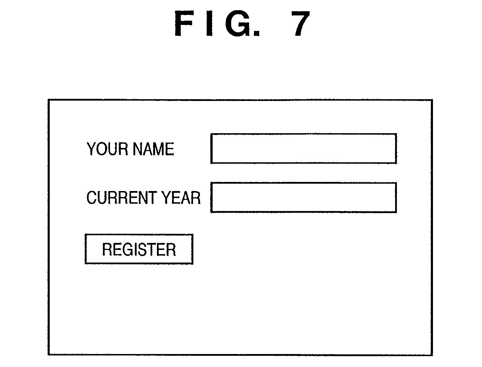

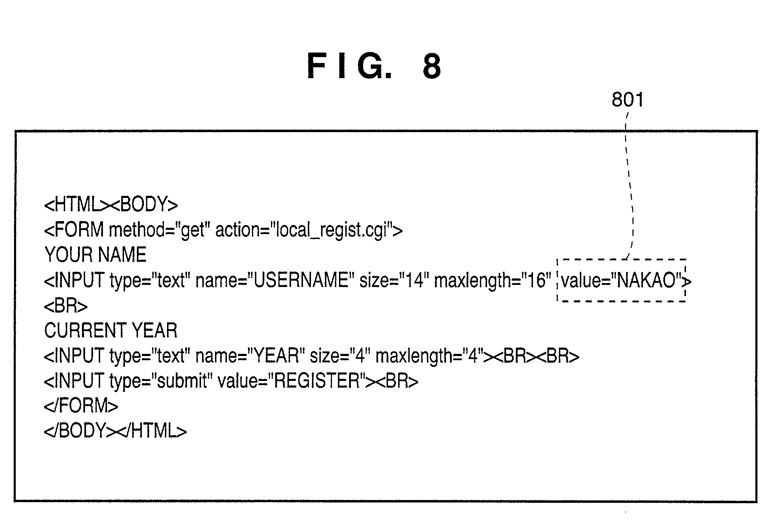

Fig. 6 shows an example of default HTML data for the registration menu. The corresponding display screen is as shown in Fig. 7. If the name "NAKAO" has been registered when the registration key 403 is pressed, the HTML-data change program reads out this set information and generates HTML data of the kind depicted in Fig. 8. In other words, markup 801 indicative of "value = NAKAO" is added to the default HTML data. If this is done, the markup 801 can be displayed as HTML content in a state that reflects the information that has been stored in the apparatus (e.g., present time, user name, various control switches, voice registration information, etc.).

It should be noted that the display screen of the registration menu is not limited to that shown in Fig. 7. As shown in Fig. 5, the screen may be provided with an area for entering a telephone number, and a check box for indicating whether or not unattended recording and transfer should be performed, etc. Areas for inputting year, month, day, hour and minute may be provided for entering the present date and time.

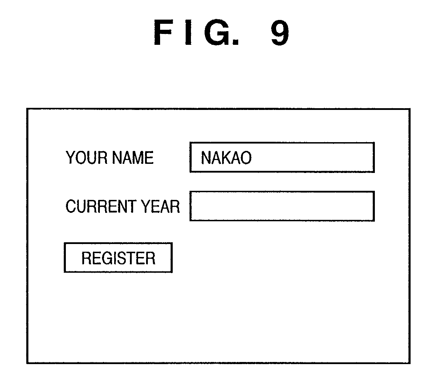

Next, at step S5, the leading address of the HTML-data storage area of the DRAM 103 in which the registration menu has been expanded is delivered to the browser and processing for launching the browser is started. Then, in a manner similar to that where ordinary Internet content is displayed, the browser analyzes the HTML data for the registration menu at step S6 and displays a registration screen of the kind shown in Fig. 9 on the LCD of the display unit 105.

In a case where no set information has been registered, markup of the kind indicated at 801 in Fig. 8 is not added on and the registration screen of Fig. 7 is displayed.

The browser is set in such a manner that a predetermined local program (an input-check program in this example) provided in the terminal will be executed without the Internet being accessed if a specific scheme name ("local_regist.cgi" in this example) has been designated as an URL and the state of the facsimile machine is the registration mode (the flag indicating the status of the registration key is ON).

Accordingly, at step S7, the user employs the registration screen to enter registration information, such as name and present time, and to select the registration button, whereupon control proceeds to step S8. Here if it is confirmed that the status of the registration key is ON and that the value of the attribute "action" in the FORM tag is "local_regist.cgi" set previously in the browser, as shown in Fig. 6 or 8, then the input-check program that has been stored in the ROM 101 in correspondence with the above URL is launched. The value such as the name entered by the user is delivered to the input-check program. That is, the input-check program resident locally operates just as if it were a CGI program on a Web server.

If the status of the registration key is ON and the designated URL is not a specific scheme, then a search for a Web server is conducted. That is, a system configuration may be adopted in which the management area of an individual on the network is rewritten even in a case where the registration key is ON.

In a case where the registration key is OFF, on the other hand, no search for the local program is conducted. The reason for this is that if an URL identical with the local URL has been written by chance (or maliciously) to content downloaded from the network, there is the danger that information internal to the apparatus may be manipulated externally.

Control next proceeds to step S9. If the result of check by the input-check program is that the set registration information is an appropriate value, then this information is stored in the registered-data storage area of the non-volatile RAM 102 at step S9.

### <Input-check Operation>

Processing for checking information that has been entered by the user will now be described in detail.

In the case of the registration menu shown in Fig. 7, numerals are capable of being entered in the "CURRENT YEAR" field. It is required that the user enter values that are in line with the apparatus specifications. The values must be numerals within a certain number of digits and must fall within a range of numerals that can be entered.

However, if a value actually entered by the user is outside the range of years that can be handled by the timekeeping IC (not shown) of the apparatus, it is required that the setting of the numerical value in the timekeeping IC be cancelled and that the user be notified to the effect that "ENTRY OF THE YEAR IS INCORRECT".

Though it is possible for such information as "DATA IS A NUMERAL" and "INPUT IS CAPABLE UP TO n DIGITS" to be delivered to the browser by a description of HTML data, a condition such as "INPUT WILL NOT BE FINALIZED IF IT IS n DIGITS" or "INPUT WILL NOT BE FINALIZED IF IT FALLS WITHIN A CERTAIN RANGE" cannot be set by HTML data.

Accordingly, an input-check program is necessary in order to perform a check of registered content before set content becomes valid in the apparatus after the browser spits out a value.

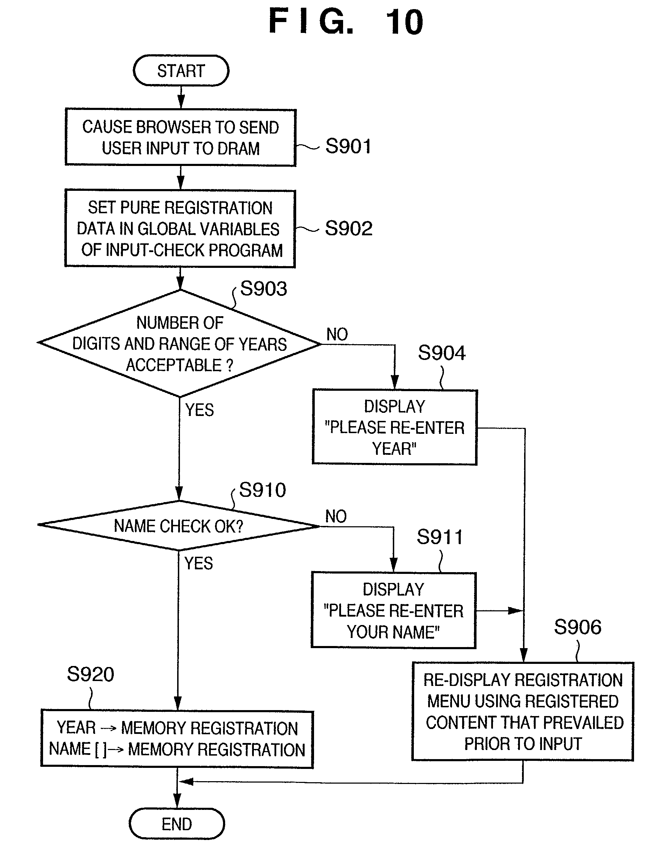

Fig. 10 is a flowchart illustrating the flow of input-check processing based upon the input-check program.

First, at step S901, information that has been entered by user operation in a state in which the registration menu is being displayed is sent to the data storage area of the DRAM 103. Next, at step S902, user-entered input values and character strings contained in the information sent to the DRAM 103 are delivered to the input-check program. Since the format of data that has been expanded in the DRAM 103 is the same as that of data that will be transmitted to the Web server, it is required that only information of the necessary portions be extracted from data expanded in the DRAM 103 and that the relevant values be set in global variables. For example, if "NAKAO" has been entered in the "YOUR NAME" field and "2000" in the "CURRENT YEAR" field in Fig. 7, then the character strings "2000" and "NAKAO" are set in the global variables "YEAR" and "NAME", respectively.

Next, at step S903, the number of digits and the range of years for "YEAR" are checked. If the apparatus satisfies the condition for entry of a Western-calendar year ("YES" at step S903), then control proceeds to step S910. If the condition for entry of a Western-calendar year is not satisfied ("NO" at step S903), then the page of the registration menu is left and a display reading "PLEASE RE-ENTER YEAR" is presented to the user at step S904.

This is followed by step S906, at which the registered content that prevailed before the change is read out of the non-volatile RAM 102, the registered content that prevailed before the user entered the year is read out and the registration menu is displayed again through a procedure similar to that of steps S2 to S6 in Fig. 1. In other words, when there is an input from the user, first the registration menu of the browser is left temporarily, values are set in the global variables and the suitability of the values is checked. If a value is inappropriate, the fact that the value is in appropriate is displayed to the user by a display program that is not the browser (e.g., by a program written in C language or the like). If it is determined that the user has confirmed the inappropriateness of the value, then the display of the registration menu is presented again by the browser in the state of registration that prevailed prior to the change.

Though it has been described that the message to the effect that the value is inappropriate is displayed by a display program that is not the browser (e.g., by a program written in C language, for example), it is permissible to have the browser present this display by HTML data. If the flow followed is: browsing for the purpose of registration → launching of the local program → closing of the browser → apparatus standby, then it is preferred that the message be displayed by software other than the browser. In a case where browsing is performed after the end of registration processing, it is preferred that the browser be launched at the same time that HTML data of this message is spat out by the local program.

Next, at step S910, the name entered by the user is checked. The value entered as the name has been set in the global variable "NAME □". Here it is determined whether the content of "NAME □" does not include a character code that is inappropriate with regard to the apparatus specifications. A character code that is inappropriate with regard to the apparatus specifications is one that is not included in the standard ASCII codes.

A facsimile machine generally transmits the name of the user in the form of an ASCII code in the transmission procedure. If code other than a standard character code is transmitted in such case, there are occasions where the received data will be a character that is not readable on the receiving side. It is preferred, therefore, that entry of code other than standard character code be limited in the registration menu. Accordingly, the character code is checked at step S910 and the user is prompted to make an entry again.

In a case where re-entry is not prompted and a character code is an inappropriate code, the code may be converted automatically to another character code having the same meaning in terms of content and this code may be registered in the apparatus. Further, in a case where half-size *katakana* has been entered, processing such as that for converting this to full-size *katakana* may be executed. This is a function with which a standard browser is not equipped. If conversion processing is executed at the stage of check processing that prevails after the browser has spat out data, an effect that can be obtained is diminished limitation upon types of characters that can be entered by the browser.

If the character-code requirement is not satisfied ("NO" at step S910), then control proceeds to step S911. Here a display reading "PLEASE RE-ENTER YOUR NAME" is presented to the user and then control proceeds to step S906.

If the name check has passed ("YES" at step S910), then control proceeds to step S920. Here the values of "YEAR" and "NAME □" that were stored temporarily as global variables are overwritten as registered data in the non-volatile RAM 102.

Thus, in accordance with this embodiment, it is possible to use HTML data, which is easy to create in a simulation environment, in order to display a registration menu or the like. Using a Web-page format, it is possible to readily create an ideal registration screen for the apparatus per se. Accordingly, in comparison with the conventional facsimile machine in which a registration screen is programmed using a program language such as C language, the creation of which involves great difficulty and which is not easy to create unless the actual equipment is used, here the difficulty involved in creating the registration screen is mitigated, creation time is shortened and it is possible to prevent a decline is design degree of freedom and a decline in efficiency. The end result is the provision of an apparatus having a high cost performance.

Further, in techniques for developing equipment based upon program language such as C language in the prior art, a plurality of products such as equipment software and software specifications must be created. However, if programming for equipment control becomes possible through use of HTML, equipment-control software and specifications can be unified, thereby enabling an improvement in development efficiency.

The foregoing embodiment has been described with regard to a facsimile machine having a browser function. However, the present invention is applicable to all communication devices such as mobile telephone terminals, terminals dedicated to the downloading of music and household appliances equipped with a browser function, so long as the device has such a browser function.

In the foregoing embodiment, default HTML data is read out and is chnaged in accordance with set content that has been registered in a registered-data storage area. However, the present invention is not limited to such an embodiment, for an arrangement may be adopted in which HTML data is generated from the start without default HTML data being provided.

Furthermore, in the foregoing embodiment, an URL to a local program is embedded in HTML data that has been provided in advance. However, a similar URL may be embedded in HTML data provided on an external network such as the Internet, and the Web page of this URL may be accessed from the facsimile machine for the purpose of launching a local program within the facsimile machine. In other words, if the user accesses the Web page of the maker of the facsimile machine and inputs predetermined identification information on the Web page, then the local program within the facsimile machine will start up automatically and the content of the ROM or non-volatile RAM will be overwritten. If such an arrangement is adopted, the configuration of the facsimile machine (the incoming-call alert tone and the color-adjustment profile, etc.) can be changed merely by accessing a prescribed Web page.

Further, in the foregoing embodiment, setting information that has been entered is checked and registered upon launching a local program from a browser. However, the present invention is not limited to this arrangement. For example, an arrangement may be adopted in which it is possible to change the content of user registration such as automatic line selection (ACR function), which is a service furnished by a telephone-service provider, or the content of center registration on a network. Further, if the present invention is applied, mechatronic control from markup language becomes possible by using a local CGI program to control the setting of an operation and the triggering of an operation that accompany mechanical motion. Control from markup language, such as device and mechatronic control, could not be achieved heretofore. By way of example, it becomes possible to perform a facsimile transmission operation using a browser.

The present invention can be applied to a system constituted by a plurality of devices (e.g., a host computer, interface, scanner, printer, etc.) or to an apparatus comprising a single device (e.g., a copier or facsimile machine, etc.).

Furthermore, it goes without saying that the object of the invention is attained also by supplying a storage medium (or recording medium) storing the program codes of the software for performing the functions of the foregoing embodiment to a system or an apparatus, reading the program codes with a computer (e.g., a CPU or MPU) of the system or apparatus from the storage medium, and then executing the program codes. In this case, the program codes read from the storage medium implement the novel functions of the embodiment and the storage medium storing the program codes constitutes the invention. Furthermore, besides the case where the aforesaid functions according to the embodiment are implemented by executing the program codes read by a computer, it goes without saying that the present invention covers a case where an operating system or the like running on the computer performs a part of or the entire actual process in accordance with the designation of program codes and implements the functions according to the embodiment.

It goes without saying that the present invention further covers a case where, after the program codes ready from the storage medium are written in a function expansion unit inserted into the computer or in a memory provided in a function expansion unit connected to the computer, a CPU or the like contained in the function expansion unit or function expansion unit performs a part of or the entire actual process in accordance with the designation of program codes and implements the function of the above embodiment.

In a case where the present invention is applied to the aforesaid storage medium, program code corresponding to the flowcharts (Fig. 1 and/or Fig. 10) described earlier would be stored in this storage medium.

Thus, in accordance with the above-described embodiment, it is possible to provide a high-productivity communication apparatus, a method of controlling the communication apparatus and a control program therefor.

As many apparently widely different embodiments of the present invention can be made without departing from the spirit and scope thereof, it is to be understood that the invention is not limited to the specific embodiments thereof except as defined in the appended claims.

## Claims

1. A communication apparatus for analyzing markup language, **characterized by** comprising:
a first memory for storing display data that has been coded in markup language, said display data being for displaying an information input screen that enables input of information from a user;
an interpreter for analyzing the display data;
means for generating display data for displaying an information input screen as the result of analysis performed by said interpreter;
an input device for inputting configuration information, which relates to configuring of the communication apparatus, to the information input screen when displayed; and
a second memory for storing the configuration information that has been input to the information input screen.

2. The apparatus according to claim 1, **characterized in that** the configuration information is information for identifying a user of the communication apparatus.

3. The apparatus according to claim 1, **characterized in that** the configuration information is information relating to date and/or time.

4. The apparatus according to claim 1, further **characterized by** comprising a controller for controlling the communication apparatus based upon the configuration information that has been input to the information input screen.

5. The apparatus according to claim 4, **characterized in that** said controller determines whether the configuration information that has been input by said input device is appropriate as configuration information of the communication apparatus, and stores this configuration information in said second memory if result of the determination is that the configuration information is appropriate as configuration information of the communication apparatus.

6. The apparatus according to claim 4, **characterized in that** the markup language is HTML, and said controller includes a processor for executing a control program handled as a CGI program in the display data.

7. The apparatus according to claim 1, further **characterized by** comprising a display data generator for generating the display data based upon the configuration information that has been stored in said second memory.

8. The apparatus according to claim 7, **characterized in that** said display data generating means generates the display data by changing default display data based upon the configuration information.

9. A communication apparatus for analyzing markup language, **characterized by** comprising:
a memory for storing a browser program, which analyzes display data coded in markup language and converts the data to display information, and a local program that executes processing different from that for displaying a browser;
a processor for executing the programs that have been stored in said memory; and
means for generating display data for displaying an image based upon the display information;
wherein the browser program is adapted to cause the processor to determine whether the display data coded in the markup language contains markup that designates execution of the local program, and to cause the processor to execute the local program if it is determined that the display data contains markup designating execution of the local program.

10. The apparatus according to claim 9, **characterized in that** the browser program determines whether status of the communication apparatus is one in which the local program is executable, and causes said processor to execute the local program if the status of the communication apparatus is one in which the local program is executable.

11. The apparatus according to claim 9, **characterized in that** said memory stores display data that has been coded in markup language, said display data being for displaying an information input screen that enables input of information from a user; and
if it has been determined that the display data contains markup that designates execution of the local program, the browser program causes the local program to be executed and delivers information, which has been input in a state in which the information input screen is being displayed, to the local program.

12. The apparatus according to claim 11, **characterized in that** the information input screen is a screen for inputting configuration information of the communication apparatus; and
the local program determines whether the information that has been entered in a state in which the information input screen is being displayed is appropriate as configuration information of the communication apparatus.

13. The apparatus according to claim 12, **characterized in that** if the information is inappropriate as configuration information of the communication apparatus, a message to this effect is displayed and then the browser program is executed in such a manner that already registered configuration information will be displayed on the information input screen.

14. The apparatus according to claim 11, **characterized in that** the information input screen is a screen for inputting configuration information of the communication apparatus; and
the local program registers the information, which has been entered in a state in which the information input screen is being displayed, in the communication apparatus.

15. The apparatus according to claim 9, **characterized in that** the markup language is HTML, and the browser program determines whether the local program is to be executed or not depending upon an URL of a value having an attribute "action" in a form tag.

16. The apparatus according to claim 9, **characterized in that** said memory further stores default display data coded in markup language, and a display-data change program for changing the default display data using information that has been registered in the communication apparatus.

17. A method of controlling a communication apparatus, **characterized by** comprising:
an analyzing step of analyzing display data for displaying an information input screen, the display data being coded in markup language;
a display step of displaying an information input screen using result of analysis performed at said analyzing step;
an input step of accepting an input to the information input screen; and
a storage step of storing information, which has been input to the information input screen, in the communication apparatus as configuration information of the communication apparatus.

18. The method according to claim 17, **characterized in that** the configuration information is information for identifying a user of the communication apparatus.

19. The method according to claim 17, **characterized in that** the configuration information is information relating to date and/or time.

20. The method according to claim 17, further **characterized by** comprising a control step of controlling the communication apparatus based upon the configuration information that has been input to the information input screen.

21. The method according to claim 20, **characterized in that** said control step determines whether the configuration information that has been input at said input step is appropriate as configuration information of the communication apparatus, and stores this configuration information at said storage step if result of the determination is that the configuration information is appropriate as configuration information of the communication apparatus.

22. The method according to claim 17, further **characterized by** comprising a display data generating step of generating the display data based upon the configuration information.

23. The apparatus according to claim 22, **characterized in that** said display data generating step generates the display data by changing default display data based upon the configuration information.

24. A method of controlling a communication apparatus having a memory storing a browser program for analyzing markup language and a local program for executing processing different from that for displaying a browser, and a display for displaying result of analysis performed by the browser program, **characterized by** comprising:
a step of launching the browser program;
an analyzing step of causing the browser program to analyze display data coded in markup language;
a display step of causing result of analysis to be displayed on a display; and
a local-program execution step of executing the local program if result of analysis is that the display data contains markup designating execution of the local program.

25. The method according to claim 24, further **characterized by** comprising a step of determining whether status of the communication apparatus is one in which the local program is executable;
wherein said local-program execution step executes the local program if the status of the communication apparatus is one in which the local program is executable.

26. The method according to claim 24, **characterized in that** said memory stores display data that has been coded in markup language, said display data being for displaying an information input screen that enables input of information from a user; and
if it has been determined as a result of analysis of the display data by the browser program that the display data contains markup that designates execution of the local program, then said local-program execution step executes the local program based upon information that has been input in a state in which the information input screen is being displayed.

27. The method according to claim 26, **characterized in that** the information input screen is a screen for inputting configuration information of the communication apparatus; and
said local-program execution step determines whether the information that has been entered in a state in which the information input screen is being displayed is appropriate as configuration information of the communication apparatus.

28. The method according to claim 27, **characterized in that** if the information is inappropriate as configuration information of the communication apparatus, then said local-program execution step displays a message to this effect and then executes the browser program in such a manner that already registered configuration information will be displayed on the information input screen.

29. The method according to claim 26, **characterized in that** the information input screen is a screen for inputting configuration information of the communication apparatus; and
said local-program execution step registers the information, which has been entered in a state in which the information input screen is being displayed, in the communication apparatus.

30. The method according to claim 24, **characterized in that** the markup language is HTML, and the browser program determines whether the local program is to be executed or not depending upon an URL of a value having an attribute "action" in a form tag.

31. A control program for a communication apparatus having a memory storing a browser program for analyzing markup language and a local program for executing processing different from that for displaying a browser, and a display for displaying result of analysis performed by the browser program, said program implementing the following steps:
a step of launching the browser program;
an analyzing step of causing the browser program to analyze display data coded in markup language;
a display step of causing result of analysis to be displayed on a display; and
a local-program execution step of executing the local program if result of analysis is that the display data contains markup designating execution of the local program.

32. A control program for controlling a communication apparatus, said program causing the following steps to be executed:
an analyzing step of analyzing display data for displaying an information input screen, the display data being coded in markup language;
a generating step of generating data for displaying an information input screen using result of analysis performed at said analyzing step;
an input step of accepting an input to the information input screen; and
a storage step of storing information, which has been input to the information input screen, in the communication apparatus as configuration information of the communication apparatus.

33. The control program according to claim 32, **characterized in that** the configuration information is information for identifying a user of the communication apparatus.

34. The control program according to claim 32, **characterized in that** the configuration information is information relating to date and/or time.
